# EUROPÄISCHE PATENTSCHRIFT

(11) **EP 2 452 943 B1**
(45) Veröffentlichungstag und Bekanntmachung des Hinweises auf die Patenterteilung: **10.07.2013**
(21) Anmeldenummer: 11187591.0
(22) Anmeldetag: 03.11.2011
(51) Int. Cl.: C07F 7/18

(54) **Verfahren zur Herstellung alkoxysubstituierter 1,2-Bis-Silyl-Ethane**
Method for producing alkoxy-substituted 1,2-Bis-Silyl-Ethanes
Méthode pour produire 1,2-Bis-Silyl-Ethanes alcoxy-substitué

(30) Priorität: 16.11.2010 DE 102010043996
(43) Veröffentlichungstag der Anmeldung: 16.05.2012
(73) Patentinhaber: Wacker Chemie AG, 81737 München (DE)
(72) Erfinder: Popp, Alfred, 82008 Unterhaching (DE); Steiner-Langlechner, Margit, 84503 Altötting (DE)
(74) Vertreter: Fritz, Helmut

(56) Entgegenhaltungen:
- EP-A1- 0 477 894

## Beschreibung

Die Erfindung betrifft die Herstellung alkoxysubstituierter 1,2-Bis-Silyl-Ethane aus einem Gemisch von 1,2-Bis-Chlorosilyl-Ethanen und 1,2-Bis-Chlorosilyl-Ethenen.

Alkoxysubstituierte 1,2-Bis-Organosilyl-Ethane sind von großem wirtschaftlichem Interesse und umfassen heute eine Vielzahl technischer Anwendungsgebiete, vor allem als Vernetzer für Silikondicht- oder Klebstoffe oder bei der Oberflächenbehandlung von Halbleitern.

Insbesondere 1,2-Bis(triethoxysilyl)ethan (CAS 16068-37-4) und 1,2-Bis(trimethoxysilyl)ethan (CAS 18406-41-2) sind wichtige Beispiele der o. g. Produktgruppe.

Die Herstellung alkoxysubstituierter 1,2-Bis-Silyl-Ethane ist seit langem bekannt und bisher finden zwei prinzipiell unterschiedliche Verfahren Verwendung,

Zum einen die Hydrosilylierung, wobei sowohl die zweifache Reaktion (I) von Alkoxy-H-Silanen mit Ethin (EP 477894, EP189197 (Vergleichsbeispiel 3), DE10034894 (Vergleichsbeispiel), US2637738 (Beispiel 2) und Watanabe et al., J. Organomet, Chem., 1980, 195(3), S. 363-374) 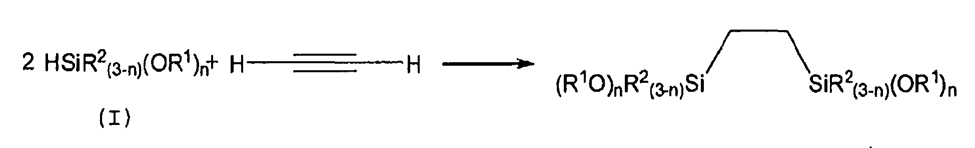 als auch die Reaktion (II) von Alkoxyvinylsilanen mit Alkoxy-H-Silanen (Pomerantseva et al., J. Gen. Chem. USSR, 1984, 54(2), S, 316 - 318) in Anwesenheit eines Edelmetallkatalysators 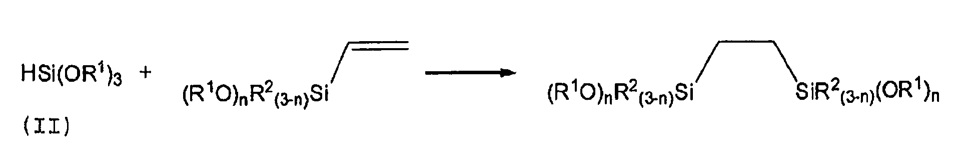 beschrieben wurden.

Die andere Variante (III) beschreiben Lakhtin et al. (Russian Journal of General Chemistry, 2001, 71(8), S. 1252-1254) mit der Alkoxylierung der korrespondierenden 1,2-Bis-Chlorosilyl-Ethane

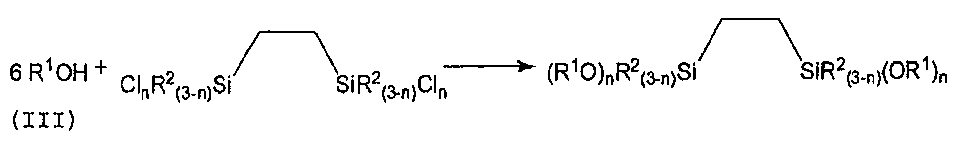

Beide Varianten besitzen den erheblichen Nachteil, dass die verwendeten Rohstoffe (Alkoxy-H-Silane, Alkoxyvinylsilane, 1,2-Bis-Chlorosilyl-Ethane) in z. T. aufwändigen Verfahren eigens hergestellt und gereinigt werden müssen.

Bei der Herstellung (IV) von vinylsubstituierten Chlorsilanen (ClₙR²₍₃₋ₙ₎Si-CH=CH₂) durch Pt-katalysierte Hydrosilylierung von ClₙR²₍₃₋ₙ₎Si-H mit Acetylen entstehen als Nebenprodukte unter anderem 1,2-Bis-Chlorosilyl-Ethane (ClₙR²₍₃₋ₙ₎Si-CH₂-CH₂- SiR²₍₃₋ₙ₎Clₙ) und 1,2-Bis-Chlorosilyl-Ethene (ClₙR²₍₃₋ₙ₎Si -CH=CH-SiR²₍₃₋ₙ₎Clₙ).

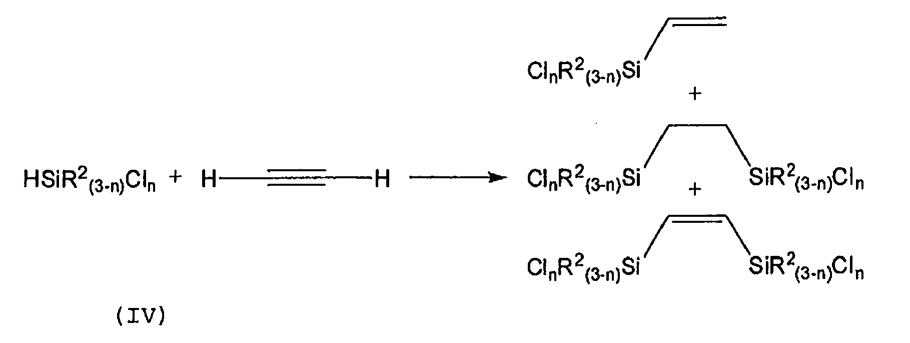

Verfahren zur Verringerung dieser Nebenreaktionen wurden beschrieben, z. B. in EP 785204, allerdings ist eine vollständige Unterdrückung nicht möglich, so dass das vinylsubstituierte Chlorsilan durch physikalische Trennoperationen (z. B. Destillation) von den Nebenprodukten abgetrennt werden muss. Die verbleibende Mischung, die u. a. 1,2-Bis-Chlorosilyl-Ethane und 1,2-Bis-Chlorosilyl-Ethene enthält, kann zu einem Teil als flüssiges Verdünnungsmittel bei der Herstellung von vinylsubstituierten Chlorsilanen eingesetzt werden (DE 2131742).

Der Anteil der ungesättigten Verbindung bei dieser Nebenreaktion verhindert, dass das Nebenprodukt analog Reaktion (III) direkt zum Zielprodukt umgewandelt werden kann. Der weitaus größere Teil kann daher bislang nicht weiterverwendet werden und muss entsorgt werden, wobei weitere Kosten für die Entsorgung entstehen.

Gegenstand der Erfindung ist ein Verfahren zur Herstellung alkoxysubstituierter 1,2-Bis-Silyl-Ethane der allgemeinen Formel 1

(R¹O)ₙR²₍₃₋ₙ₎Si-CH₂-CH₂-SiR²₍₃₋ₙ₎(OR¹)ₙ (1),

bei dem in einem ersten Schritt eine Mischung, enthaltend Verbindungen der allgemeinen Formeln 2 und 3

ClₙR²₍₃₋ₙ₎Si-CH₂-CH₂-SiR²₍₃₋ₙ₎Clₙ (2)

ClₙR²₍₃₋ₙ₎Si-CH=CH-SiR²₍₃₋ₙ₎Clₙ (3)

mit einem Alkohol der allgemeinen Formel 4

R¹OH (4)

umgesetzt wird
und in einem zweiten Schritt die erhaltene Mischung, die Verbindungen der allgemeinen Formel 1 und Verbindungen der allgemeinen Formel 5

(R¹O)ₙR²(3-n)Si-CH=CH-SiR² (3-n)(OR¹)n (5),

enthält, reduktiven Bedingungen unterworfen wird, so dass die Verbindung der allgemeinen Formel 5 in eine Verbindung der allgemeinen Formel 1 überführt wird,
wobei
- R¹ und R²: einwertige, unsubstituierte oder halogensubstituierte Kohlenwasserstoffreste mit 1 bis 16 Kohlenstoffatomen und
- n: die Werte 1, 2 oder 3 bedeuten.

Mit dem Verfahren kann der bei der Herstellung von vinylsubstituierten Chlorsilanen anfallende Abfall ökonomisch und ökologisch in alkoxysubstituierte 1,2-Bis-Silyl-Ethane der allgemeinen Formel 1 überführt werden.

Beispiele für die Reste **R¹** und **R²** sind lineare, verzweigte oder cyclische Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte Derivate der voranstehenden Reste, wie 3,3,3-Trifluorpropyl- und 3-Iodopropylrest. Bevorzugte Reste **R¹** und **R²** enthalten 1 bis 10, insbesondere 1 bis 6 Kohlenstoffatome sowie gegebenenfalls Halogensubstituenten, insbesondere Fluor-und Chlorsubstituenten. Besonders bevorzugte Reste **R¹** und **R²** sind Methyl, Ethyl, n-Propyl, i-Propyl, n-Butyl, tert.-Butyl und Phenyl. Insbesondere bevorzugt als Reste **R¹** sind Methyl, Ethyl, n-Propyl und n-Butyl.

Die im ersten Schritt eingesetzte Mischung kann jeweils nur eine Verbindung der allgemeinen Formeln 2 und 3 oder mehrere unterschiedliche Verbindungen der allgemeinen Formeln 2 und 3 enthalten.

Bevorzugt setzt man dabei eine Mischung ein, die Verbindungen, bei denen **R²** gleich ist und Reste aus der Gruppe Methyl, Ethyl, Propyl, n-Butyl, tert.-Butyl und Phenyl bedeutet.

Bevorzugt setzt man dabei eine Mischung ein, die Verbindungen enthält, bei denen n die Werte 2 und 3 annimmt.

Besonders bevorzugt setzt man dabei eine Mischung enthaltend 1,2-Bis(Trichlorsilyl)ethan und T,2-Bis-(Trichlorsilyl)ethen bzw. eine Mischung enthaltend 1,2-Bis-(Dichlormethylsilyl)ethan und 1,2-Bis-(Dichlormethylsilyl)ethen ein.

Für die Umsetzung im ersten Schritt mit dem Alkohol der allgemeinen Formel 4 setzt man geeigneter Weise eine Mischung ein, die die Verbindungen der allgemeinen Formeln 2 und 3 in einem molaren Verhältnis von 1000:1 bis 1:1000, besonders bevorzugt von 100:1 bis 1:100, ganz besonders bevorzugt von 10:1 bis 1:10 enthalten.

Für die Umsetzung im ersten Schritt der SiCl-Gruppen mit dem Alkohol der allgemeinen Formel 4 wählt man ein geeignetes Verhältnis des Alkohols zu den vorhandenen SiCl-Gruppen der Verbindungen der allgemeinen Formeln 2 und 3. Das molare Verhältnis Alkohol , SiC1 kann aus einem Bereich vom 1 _{:} 1 bis 1 : 1000, bevorzugt aus einem Bereich vom 1 : 1 bis 1 : 10 ausgewählt werden.

Der erste Verfahrenschritt kann sowohl diskontinuierlich als auch kontinuierlich durchgeführt werden, wobei ein kontinuierlicher Prozess bevorzugt ist.

Der erste Verfahrenschritt kann mit oder ohne Zusatz eines Lösungsmittels oder Lösungsmittelgemisches, sofern das Lösungsmittel bzw. das Lösungsmittelgemisch die Reaktion nicht beeinflusst oder zu unerwünschten Nebenreaktionen führt, durchgeführt werden.

Erfolgt die Reaktion diskontinuierlich wird die Reaktion vorzugsweise in einem geeigneten inerten Lösungsmittel oder Lösungsmittelgemisch durchgeführt. Erfolgt die Reaktion kontinuierlich wird die Reaktion vorzugsweise ohne Zusatz eines Lösungsmittels oder Lösungsmittelgemischs durchgeführt.

Falls im ersten Verfahrenschritt Lösungsmittel verwendet werden, sind Lösungsmittel oder Lösungsmittelgemische mit einem Siedepunkt bzw. Siedebereich von bis zu 120° C bei 0,1 MPa (abs.) bevorzugt.

Das inerte Lösungsmittel wird bevorzugt ausgewählt aus der Gruppe enthaltend aliphatische bzw. aromatische Kohlenwasserstoffe, halogenierte Kohlenwasserstoffe, Ether, oder Mischungen der genannten Lösungsmittel.

Als Lösungsmittel kann auch das Zielprodukt verwendet werden.

Aus der Gruppe der Kohlenwasserstoffe ist insbesondere Hexan, Cyclohexan, Petrolether oder Toluol bevorzugt.

Der erste Verfahrenschritt kann mit oder ohne Zusatz eines Katalysators durchgeführt werden. Vorteilhafterweise wird die Reaktion in Abwesenheit eines Katalysators durchgeführt.

Die Abtrennung des im ersten Schritt entstehenden Chlorwasserstoffs kann sowohl chemisch als auch physikalisch erfolgen. Zur chemischen Abtrennung stehen alle dem Fachmann bekannten Methoden zur Bindung von Chlorwasserstoff zur Verfügung. Bevorzugt sind Basen, wie Alkoholate von Lithium, Natrium und Kalium mit primären Alkoholen mit 1 bis 6 Kohlenstoffatomen, insbesondere Methanol, Ethanol und n-Butanol; wie Alkali- und Erdalkalihydroxide, wie LiOH, NaOH, KOH, RbOH, CSOH, Mg(OH)₂, Ca(OH)2, Sr(OH)₂, Ba(OH)₂; Amide, wie Natrium- und Kaliumamid; Hydride, wie Natrium-, Kalium- und Calciumhydrid; primäre, sekundäre und tertiäre Amine mit Alkylresten mit 1 bis 6 Kohlenstoffatomen, insbesondere Trimethylamin und Triethylamin; Ammoniak.

Bevorzugt wird der Chlorwasserstoff mit einer Base umgesetzt und das Reaktionsprodukt abgetrennt. Besonders bevorzugt erfolgt diese Abtrennung unter Verwendung von Ammoniak und das entstehende Ammoniumsalz wird durch Filtration entfernt. Die bevorzugte physikalische Abtrennung erfolgt durch destillative Abtrennung des Chlorwasserstoffs,

Der erste Verfahrensschritt wird vorteilhafterweise bei einer Temperatur von - 40 °C bis 180 °C durchgeführt, bevorzugt bei mindestens 0 °C, besonders bevorzugt bei mindestens 20 °C, und bevorzugt bei höchstens 150°C., insbesondere bei höchstens 120 °C.

Zur Erzeugung der reduktiven Bedingungen im zweiten Verfahrensschritt kommen alle dem Fachmann bekannten Verfahren in Frage, um die Verbindung der allgemeinen Formel 5 in eine Verbindung der allgemeinen Formel 1 zu überführen. Vorzugsweise wird die Mischung im zweiten Verfahrensschritt mit einem Hydrierungsmittel, insbesondere mit Wasserstoff versetzt. Beispielsweise kann im zweiten Verfahrensschritt eine katalysierte Umsetzung mit Wasserstoff erfolgen.

Als Katalysator kommen für diese Reaktion Übergangsmetalle in Frage, bevorzugt Elemente der Eisen-Platin-Gruppe (Gruppen 8 - 10 des Periodensystems) und daraus besonders bevorzugt die Platinmetalle (Ru, Os, Rh, Ir, Pd, Pt).

Der Katalysator kann in reiner metallischer Form, als Metallsalz oder Metallkomplex eingesetzt werden. Darüber hinaus ist eine Fixierung auf einem Trägermaterial (beispielsweise Aktivkohle oder Al₂O₃) möglich. Der Katalysator kann dann sowohl homogen gelöst als auch heterogen in der Reaktionsmischung vorliegen. Bevorzugt wird ein immobilisierter Katalysator eingesetzt, besonders bevorzugt Palladium auf Aktivkohle.

Die Konzentration des Katalysators in der Reaktionsmischung kann über einen weiten Bereich variiert werden. Bevorzugt beträgt die Konzentration des reinen Katalysators (ohne Trägermaterial, Komplexbildner o, ä) mindestens 0,001 Gew.-%, besonders bevorzugt mindestens 0,005 Gew.-%, und bevorzugt höchstens 0,1 Gew,-%, insbesondere höchstens 0,01 Gew.-%.

Der zweite Verfahrenschritt kann mit oder ohne Zusatz eines Lösungsmittels oder Lösungsmittelgemisches, sofern das Lösungsmittel bzw. das Lösungsmittelgemisch die Reaktion nicht beeinflusst oder zu unerwünschten Nebenreaktionen führt, durchgeführt werden.

Falls im zweiten Verfahrenschritt Lösungsmittel verwendet werden, sind Lösungsmittel oder Lösungsmittelgemische mit einem Siedepunkt bzw. Siedebereich von bis zu 120° C bei 0,1 MPa (abs.) bevorzugt.

Das Lösungsmittel wird bevorzugt ausgewählt aus der Gruppe enthaltend aliphatische bzw. aromatische Kohlenwasserstoffe, Ether, Alkohole oder Mischungen der genannten Lösungsmittel.

Aus der Gruppe der Alkohole sind insbesondere Alkohole der allgemeinen Formel 4 bevorzugt. Besonders bevorzugt wählt man den Alkohol aus der Gruppe bestehend aus Methanol, Ethanol und n-Butanol aus.

Wird der zweite Verfahrenschritt mit Zusatz eines Lösungsmittels oder Lösungsmittelgemisches durchgeführt, so kann die Konzentration der Ausgangsverbindung zwischen den Grenzen 0% und 100% jeden beliebigen Wert annehmen. Bevorzugt liegt die Konzentration in einem Bereich von 20 - 80 %, besonders bevorzugt in einem Bereich von 50 - 70 %.

Der für den zweiten Verfahrenschritt benötigte Wasserstoff kann in einem beliebigen Druckintervall zur Verfügung gestellt werden. Bevorzugt liegt dieser Druckintervall zwischen 1 und 100 bar, besonders bevorzugt zwischen 1 und 10 bar.

Die für den zweiten Verfahrenschritt benötigte Reaktionstemperatur wird durch die Wahl des Substrats und des Lösungsmittels bzw. Lösungsmittelgemisches bestimmt. Bevorzugt wird eine Temperatur, die zwischen der Raumtemperatur und dem Siedepunkt der Reaktionsmischung liegt, gewählt. Vorzugsweise beträgt die Temperatur im zweiten Verfahrenschritt mindestens 20 °C, besonders bevorzugt mindestens 50 °C und bevorzugt höchstens 120 °C, insbesondere höchstens 100 °C.

Der Reaktionsverlauf lässt sich leicht mit üblichen Methoden, wie beispielsweise gaschromatographisch oder per HPLC verfolgen. Die Reaktionsdauer wird so gewählt, dass der gewünschte Anteil der ungesättigten Verbindung der allgemeinen Formel 5 abreagiert hat.

Zwischen die beiden erfindungsgemäßen Verfahrensschritte kann ein Reinigungsschritt eingeschoben werden. Bevorzugt wird das Produkt nach dem ersten Verfahrensschritt einer destillativen Reinigung unterzogen, bevor mit dem zweiten Verfahrensschritt fortgefahren wird,

Nach dem erfindungsgemäßen Verfahren kann man bevorzugt die alkoxysubstituierten 1,2-Bis-Silyl-Ethane, insbesondere 1,2-Bis(trialkoxysilyl)ethane, 1,2-Bis(dialkoxymethylsilyl)ethane sowie 1,2-Bis(monoalkoxydimethylsilyl)ethane herstellen, wobei Alkoxy bevorzugt für Methoxy oder Ethoxy steht.

So setzt man nach dem erfindungsgemäßen Verfahren vorzugsweise eine Mischung enthaltend 1,2-Bis-(Trichlorsilyl)ethan (C1₃Si-CH₂-CH₂-SiC1₃) und 1,2-Bis-(Trichlorsilyl)ethen (C1₃Si-CH=CH-SiC1₃) mit einem Alkohol der allgemeinen Formel 4, Ethanol um und unterzieht das erhaltene Reaktionsgemisch einer Reduktion mit Wasserstoff in Anwesenheit von Palladium, so dass das Zielprodukt 1,2-Bis-(Triethoxysilyl)ethan ((EtO)₃Si-CH₂-CH₂-Si(OEt)₃) erhalten wird.

In einer bevorzugten Ausführungsform wird das erfindungsgemäße Verfahren wie folgt ausgeführt:

Vorzugsweise wird eine Mischung enthaltend Verbindungen der allgemeinen Formeln 2 und 3, in einem Reaktionsgefäß vorgelegt und vorzugsweise in einem inerten Lösungsmittel, beispielsweise Toluol gelöst.

Anschließend wird der Alkohol der allgemeinen Formel 4, z. B. Ethanol, zu der Lösung zugegeben und dabei der Reaktionsgefäß-Inhalt gut durchmischt. Es folgt vorzugsweise die Zugabe von Ammoniak, vorzugsweise solange bis der zugegebene Ammoniak nicht mehr durch Chlorwasserstoff gebunden wird. Ausgefallenes Ammoniumchlorid wird vorzugsweise durch Filtration entfernt, und das Filtrat wird vorzugsweise durch Destillation gereinigt. Ebenso kann der erste Verfahrensschritt durch kontinuierliche Reaktion der Mischung der Verbindungen der allgemeinen Formeln 2 und 3 mit dem Alkohol der allgemeinen Formel 4 in einer Reaktionskolonne, beispielsweise im Gegenstromverfahren, erfolgen. Dabei wird entstehender Chlorwasserstoff vorzugsweise destillativ aus dem Reaktionssystem entfernt.

Der zweite Verfahrensschritt kann beispielsweise durch Hydrierung der im ersten Schritt erhaltenen Mischung in einem Lösungsmittel, wie Alkohol, z. B. Ethanol sowohl kontinuierlich als auch diskontinuierlich, vorzugsweise in einem Autoklaven erfolgen: Dazu wird der Lösung vorzugsweise ein Palladiumkatalysator zugesetzt und vorzugsweise unter erhöhtem Wasserstoffdruck die Reaktion durchgeführt.

So kann man nach dem erfindungsgemäßen Verfahren in vorteilhafter Weise, da einfach und wirtschaftlich, beispielsweise 1,2-Bis-(Triethoxysilyl)ethan ausgehend von einer Mischung aus 1,2-Bis-(Trichlorysilyl)ethan und 1,2-Bis-(Trichlorysilyl)ethen mit einer hervorragenden Ausbeute herstellen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Erfindungsgemäßes Beispiel 1:

In einem 2L-Kolben mit Thermometer, Rückflusskühler, Rührer und einem Zulaufgefäß werden unter Stickstoffüberlagerung 300 g einer Mischung enthaltend 1,2-Bis(trichlorsilyl)ethan (79%), Bis(trichlorsilyl)ethen (12%), Trichlorvinylsilan (6%) und Trichlorethylsilan (3 %) in 200 mL Toluol als Lösungsmittel vorgelegt und auf eine Temperatur von 50 - 60 °C temperiert. Dann werden 300 g Ethanol bei dieser Temperatur zudosiert und noch 60 min bei dieser Temperatur gerührt. Anschließend wird innerhalb 60 min ein Grossteil des entstandenen Chlorwasserstoffs durch Einleiten von Stickstoff ausgetrieben. Verbleibender Chlorwasserstoff wird durch Einleiten von gasförmigem Ammoniak gebunden. Nach beendeter Ammoniakaufnahme wird noch 10 min bei 50 - 60 °C gerührt, um die Reaktion zu vervollständigen. Der Salzbrei wird abfiltriert und das Filtrat destillativ (40cm-Kolonne gefüllt mit Glasfüllkörpern, automatischer Kolonnenkopf mit Rücklaufverhältnis 10 : 1, p = 1 mbar, Sumpftemperatur bis 166 °C, Siedepunkt des Produktsgemischs 128 - 130 °C) gereinigt. 40 g vom Destillat werden in 20 g Ethanol gelöst und 0,02 g Katalysator (5-10% Palladium auf Aktivkohlepulver, E1525 MA/W 10% der Fa. Degussa) zugegeben. Die Suspension wird in einem Autoklaven mit 5 bar Wasserstoff beaufschlagt und auf 80 °C erhitzt. Nach 4 h ist die Reaktion beendet, der Katalysator wird abfiltriert und das Produkt destillativ gereinigt. Man erhält das Produkt 1,2-Bis-(Triethoxysilyl)ethan mit einer Reinheit von 97,5 % (n_{D}²⁰ = 1,4090, HCl-Gehalt = 2,3 ppm, Hazen-Farbzahl = 46). Palladium ist im Produkt nicht mehr nachweisbar. Die Auswertung der Zusammensetzung erfolgt jeweils gaschromatographisch.

### Erfindungsgemäßes Beispiel 2:

Versuchsdurchführung und Analysenergebnisse vergleichbar mit Beispiel 1, allerdings wird zur Abtrennung des Chlorwasserstoffs Natriumethylat verwendet und das entstehende NaC1 abfiltriert.

### Erfindungsgemäßes Beispiel 3:

Versuchsdurchführung und Analysenergebnisse vergleichbar mit Beispiel 1, allerdings wird als inertes Lösungsmittel anstelle Toluol Petrolether verwendet.

### Erfindungsgemäßes Beispiel 4:

Versuchsdurchführung und Analysenergebnisse vergleichbar mit Beispiel 1, allerdings wird als inertes Lösungsmittel anstelle Toluol das Produkt 1,2-Bis-(Triethoxysilyl)ethan verwendet.

### Erfindungsgemäßes Beispiel 5:

Versuchsdurchführung und Analysenergebnisse vergleichbar mit Beispiel 1, allerdings wird als Palladiumkatalysator Palladium/Aktivkohle (10% Pd) der Fa. Merck bei einem Wasserstoff-Druck von 1 bar verwendet. Die Reaktion war nach 6 Stunden beendet.

### Erfindungsgemäßes Beispiel 6:

Versuchsdurchführung und Analysenergebnisse vergleichbar mit Beispiel 1, allerdings werden bei der Hydrierung 164 g enthaltend 1.2-Bis(Triethoxysilyl)ethan und 1.2-bis(Triethoxysilyl)ethen in 154 g Ethanol gelöst und mit 5 g 10% Pd/C 50% H₂O Typ K-02105 der Fa. Heraeus bei einem Wasserstoff-Druck von 1 bar zur Reaktion gebracht, Die Reaktion war nach 1 Stunde beendet.

## Patentansprüche

1. Verfahren zur Herstellung alkoxysubstituierter 1,2-Bis-Silyl-Ethane der allgemeinen Formel 1
(R¹O)ₙR²₍₃₋ₙ₎Si-CH₂-CH₂-SiR²₍₃₋ₙ₎ (OR¹)ₙ (1),
bei dem in einem ersten Schritt eine Mischung, enthaltend Verbindungen der allgemeinen Formeln 2 und 3
ClₙR²₍₃₋ₙ₎Si-CH₂-CH₂-SiR²₍₃₋ₙ₎Clₙ (2)
ClₙR²₍₃₋ₙ₎Si-CH=CH-SiR²₍₃₋ₙ₎Clₙ (3)
mit einem Alkohol der allgemeinen Formel 4
R¹OH (4)
umgesetzt wird
und in einem zweiten Schritt die erhaltene Mischung, die Verbindungen der allgemeinen Formel 1 und Verbindungen der allgemeinen Formel 5
(R¹O)ₙR²₍₃₋ₙ₎Si-CH=CH-SiR²₍₃₋ₙ₎ (OR¹)ₙ (5),
enthält, reduktiven Bedingungen unterworfen wird, so dass die Verbindung der allgemeinen Formel 5 in eine Verbindung der allgemeinen Formel 1 überführt wird,
wobei
**R¹** und **R²** einwertige, unsubstituierte oder halogensubstituierte Kohlenwasserstoffreste mit 1 bis 16 Kohlenstoffatomen und
n die Werte 1, 2 oder 3 bedeuten.

2. Verfahren nach Anspruch 1, bei dem die Reste **R¹** ausgewählt werden aus Methyl, Ethyl, n-Propyl und n-Butyl.

3. Verfahren nach Anspruch 1 oder 2, bei dem die Reste **R²** gleich sind und Reste aus der Gruppe Methyl, Ethyl, Propyl, n-Butyl, tert.-Butyl und Phenyl bedeuten.

4. Verfahren nach Anspruch 1 bis 3, bei dem die im ersten Schritt eingesetzte Mischung die Verbindungen der allgemeinen Formeln 2 und 3 in einem molaren Verhältnis von 100:1 bis 1:100 enthält.

5. Verfahren nach Anspruch 1 bis 4, bei dem im ersten Verfahrensschritt die Reaktion mit dem Alkohol der allgemeinen Formel 4 kontinuierlich erfolgt.

6. Verfahren nach Anspruch 1 bis 5, bei dem die reduktiven Bedingungen im zweiten Verfahrensschritt eine katalysierte Umsetzung mit Wasserstoff bedeuten.

## Claims

1. Method for producing alkoxy-substituted 1,2-bissilylethanes of the general formula 1
(R¹O)ₙR²₍₃₋ₙ₎Si-CH₂-CH₂-SiR²₍₃₋ₙ₎(OR¹)ₙ (1).
which comprises reacting, in a first step, a mixture containing compounds of the general formulae 2 and 3
ClₙR²₍₃₋ₙ₎Si-CH₂-CH₂-SiR²₍₃₋ₙ₎Clₙ (2)
ClₙR²₍₃₋ₙ₎Si-CH=CH-SiR²₍₃₋ₙ₎Clₙ (3)
with an alcohol of the general formula 4
R¹OH (4)
and, in a second step, subjecting the resultant mixture which contains compounds of the general formula 1 and compounds of the general formula 5
(R¹O)ₙR²₍₃₋ₙ₎Si-CH=CH-SiR²₍₃₋ₙ₎ (OR¹)ₙ (5)
to reductive conditions such that the compound of the general formula 5 is converted into a compound of the general formula 1,
wherein
**R¹** and **R²** are monovalent, unsubstituted or halogen-substituted hydrocarbon radicals having 1 to 16 carbon atoms and
**n** is the values 1, 2 or 3.

2. Method according to Claim 1, wherein the radicals **R¹** are selected from methyl, ethyl, n-propyl and n-butyl.

3. Method according to Claim 1 or 2, wherein the radicals **R²** are identical and are radicals from the group methyl, ethyl, propyl, n-butyl, tert-butyl and phenyl.

4. Method according to Claim 1 to 3, wherein the mixture used in the first step contains the compounds of the general formulae 2 and 3 in a molar ratio of 100:1 to 1:100.

5. Method according to Claim 1 to 4, wherein, in the first method step, the reaction with the alcohol of the general formula 4 proceeds continuously.

6. Method according to Claim 1 to 5, wherein the reductive conditions in the second method step mean a catalyzed reaction with hydrogen.

## Revendications

1. Procédé de fabrication de 1,2-bis-silyl-éthanes à substitution alcoxy de formule générale 1
(R¹O)ₙR²₍₃₋ₙ₎Si-CH₂-CH₂-SiR²₍₃₋ₙ₎ (OR¹)ₙ (1)
dans lequel, lors d'une première étape, un mélange contenant des composés des formules générales 2 et 3
ClₙR²₍₃₋ₙ₎Si-CH₂-CH₂-SiR²₍₃₋ₙ₎Clₙ (2)
ClₙR²₍₃₋ₙ₎Si-CH=CH-SiR²₍₃₋ₙ₎Clₙ (3)
est mis en réaction avec un alcool de formule générale 4
R¹OH (4)
et, lors d'une seconde étape, le mélange obtenu, qui contient des composés de formule générale 1 et des composés de formule générale 5
(R¹O)ₙR²₍₃₋ₙ₎S1-CH=CH-SiR²₍₃₋ₙ₎ (OR¹)ₙ (5),
est soumis à des conditions réductrices, de manière à ce que le composé de formule générale 5 soit transformé en un composé de formule générale 1,
R¹ et R² signifiant des radicaux hydrocarbonés monovalents, non substitués ou substitués par des halogènes, contenant 1 à 16 atomes de carbone, et
n signifiant les valeurs 1, 2 ou 3.

2. Procédé selon la revendication 1, dans lequel les radicaux R¹ sont choisis parmi méthyle, éthyle, n-propyle et n-butyle.

3. Procédé selon la revendication 1 ou 2, dans lequel les radicaux R² sont identiques et signifient des radicaux du groupe méthyle, éthyle, propyle, n-butyle, tert.-butyle et phényle.

4. Procédé selon les revendications 1 à 3, dans lequel le mélange utilisé lors de la première étape contient les composés des formules générales 2 et 3 en un rapport molaire de 100:1 à 1:100.

5. Procédé selon les revendications 1 à 4, dans lequel, lors de la première étape de procédé, la réaction avec un alcool de formule générale 4 a lieu en continu.

6. Procédé selon les revendications 1 à 5, dans lequel les conditions réductrices lors de la seconde étape de procédé signifient une réaction catalysée avec de l'hydrogène.
